# EUROPEAN PATENT APPLICATION

(11) **EP 4 793 251 A1**
(43) Date of publication of application: **19.08.2026**
(21) Application number: 25157731.8
(22) Date of filing: 13.02.2025
(51) Int. Cl.: C04B 28/00, C04B 12/00

(54) **ACTIVATION OF DRY POWDER BINDER SYSTEMS FOR PRODUCING COMPOSITE MATERIALS**

(71) Applicant: Fraunhofer-Gesellschaft zur Förderung der angewandten Forschung e.V., 80686 München (DE)
(72) Inventor: KAISER, Christian, 83626 Valley (DE); ENGELS, Katharina, 83626 Valley (DE)
(74) Representative: Maiwald GmbH

(57) **Abstract**

The present invention relates to a method for producing a composite material comprising the steps of mixing dry powders of a silica source and an alkaline aluminate source to obtain a dry powder binder system, optionally mixing the dry powder binder system with one or more dry powder(s) of inert components to obtain a dry powder mixture, whereby the dry powder binder system or the dry powder mixture comprises water of crystallization and/or pore water, but no additional water is added to the dry powder binder system and the dry powder mixture; and subjecting the dry powder binder system or the dry powder mixture to elevated pressure, whereby the water of crystallization and/or pore water is released from the dry powder binder system or the dry powder mixture, and the released water induces geopolymerization of the silica source and the alkaline aluminate source to obtain a composite material comprising a geopolymer,
an article comprising the composite material obtainable from said method, and the use of said dry powder binder system for producing a composite material comprising a geopolymer, in which the geopolymerization is induced at elevated pressure without adding additional water.

## Description

The present invention relates to a method for producing a composite material comprising the steps of mixing dry powders of a silica source and an alkaline aluminate source to obtain a dry powder binder system, optionally mixing the dry powder binder system with one or more dry powder(s) of inert components to obtain a dry powder mixture, whereby the dry powder binder system or the dry powder mixture comprises water of crystallization and/or pore water, but no additional water is added to the dry powder binder system and the dry powder mixture; and subjecting the dry powder binder system or the dry powder mixture to elevated pressure, whereby the water of crystallization and/or pore water is released from the dry powder binder system or the dry powder mixture, and the released water induces geopolymerization of the silica source and the alkaline aluminate source to obtain a composite material comprising a geopolymer, an article comprising the composite material obtainable from said method, and the use of said dry powder binder system for producing a composite material comprising a geopolymer, in which the geopolymerization is induced at elevated pressure without adding additional water.

### Technical background

High-strength materials in automotive industry such as brake pads or structural parts, high-strength, and fast-hardening components in building industry such as substitutes for conventional cement products, lightweight and heat resistant components in the aerospace industry or high-strength, electrically insulating components in electronics industry can be prepared by geopolymerization.

Geopolymers are generally produced from wet systems or liquid activation. Thereby, geopolymers are usually obtained from the reaction of aluminosilicate powder with an alkaline solution based on alkali metal hydroxides or alkali silicates. Systems based on liquid components make handling more difficult in processes with compression moulds. Conventional wet systems have difficulties in precisely controlling the reaction process, which leads to fluctuating material properties and makes post-treatment necessary.

EP 3 128 201 A2 discloses a method for producing friction material using a geopolymeric binder, which is obtained by dry grinding caustic soda flakes and subsequent dry mixing of the soda powder with kaolin. However, according to the discussion in the background art section of WO 2023/238090 it is discussed that the dry grinding of caustic soda in said dry powder system proposed in EP 3 128 201 A2 is a high-risk process and may produce very fine and volatile highly caustic and irritating sodium hydroxide powders, which could be accidentally inhaled by operators. Moreover, during grinding soda powders can absorb a significant and not controlled quantity of moisture from the environment, which can cause production problems. WO 2023/238090 therefore proposes a process in which a wet paste of alkaline silicate solution with an aluminosilicate selected from metakaolin, kaolin, fly ash and mixtures thereof is prepared, which is then dried to obtain a dried geopolymer aggregate, which is then grinded to a geopolymer powder, re-wetted to the desired moisture content, mixed with other components, such as fibers, fillers, abrasives to obtain a raw frictional material and hot molding the raw friction material to obtain a block of friction material comprising geopolymer as binder.

The object of the present invention is to provide an easy-to-handle dry powder system that can be used as geopolymeric binder in the production of high-strength materials.

It has surprisingly been found that by mixing a dry powder consisting of a silica source and a dry powder consisting of an alkaline aluminate source a dry powder binder system can be obtained, which can be used as binder for producing a high strength composite material by subjecting the dry mixture of the dry binder system and one or more dry powder(s) of inert components to elevated pressure and elevated temperature. Thereby, under elevated pressure and elevated temperature water of crystallization and/or pore water is released from the dry powder mixture, and the released water induces geopolymerization of the silica source and the alkaline aluminate source.

### Summary of the invention

In a first aspect the present invention relates to a method for producing a composite material comprising the following steps:
- Mixing a dry powder consisting of a silica source and a dry powder consisting of an alkaline aluminate source to obtain a dry powder binder system;
- Optionally mixing the dry powder binder system with one or more dry powder(s) of inert components to obtain a dry powder mixture,

whereby the dry powder binder system or the dry powder mixture comprises water of crystallization and/or pore water, but no additional water is added to the dry powder binder system and the dry powder mixture;
   - Subjecting the dry powder binder system or the dry powder mixture to elevated pressure,
whereby the water of crystallization and/or pore water is released from the dry powder binder system or the dry powder mixture, and the released water induces geopolymerization of the silica source and the alkaline aluminate source to obtain a composite material comprising a geopolymer.

In a second aspect the present invention relates to an article comprising the composite material obtainable from the method as described above or below.

In a third aspect the present invention relates to the use of a dry powder binder system comprising a mixture of a dry powder consisting of a silica source and a dry powder consisting of an alkaline aluminate source for producing a composite material comprising a geopolymer, in which the geopolymerization is induced at elevated pressure and elevated temperature without adding additional water.

### Detailed description of the invention

### Method

In a first aspect the present invention relates to a method for producing a composite material comprising the following steps:
- Mixing a dry powder consisting of a silica source and a dry powder consisting of an alkaline aluminate source to obtain a dry powder binder system;
- Optionally mixing the dry powder binder system with one or more dry powder(s) of inert components to obtain a dry powder mixture,

whereby the dry powder binder system or the dry powder mixture comprises water of crystallization and/or pore water, but no additional water is added to the dry powder binder system or the dry powder mixture;
   - Subjecting the dry powder binder system or the dry powder mixture to elevated pressure,
whereby the water of crystallization and/or pore water is released from the dry powder binder system or the dry powder mixture, and the released water induces geopolymerization of the silica source and the alkaline aluminate source to obtain a composite material comprising a geopolymer.

The silica source is preferably selected from silica, silicate, silicate glass or mixtures thereof.

The silica preferably comprises amorphous silica.

The amount of amorphous silica is usually in the range of from 60 to 100 wt.-%, more preferably from 70 to 100 wt.-%, more preferably 75 to 100 wt.-%, based on the total amount of silica.

Amorphous silica can be selected from synthetic amorphous silica, natural amorphous silica and mixtures thereof.

Examples for synthetic amorphous silica are silica gel, precipitated silica, pyrogenic silica, fumed silica, electric arc silica and plasma silica, such as rice husk ash. Examples for natural amorphous silica are diatomaceous earth, calcined diatomaceous earth and opal.

Silicates can be selected from alkali silicates or ammonium silicates, preferably alkali silicates, such as sodium silicate or potassium silicate.

Silicate glass is an amorphous silicate-rich solid which is usually obtained by fast cooling or quenching of the molten material. Silicate glass can be selected from natural silicate glass or synthetic silicate glass.

Natural silicate glass can be selected from volcanic silica glass, such as e.g. obsidian, from impactite, which formed by impact of a meteorite, such as e.g. Moldavite or Libyan desert glass, or fulgurite, which is formed by vitrification of quartz, such as e.g. when lighting strikes sand.

Synthetic silicate glass is usually produced from melting quartz optionally in the presence of additives, and quenching the molten material.

The silicate glass can be in form of particles or needles, such as glass saw dust, glass needles, grinded glass etc.

Silicates and silicate glass are generally classified as amorphous.

The silica source is preferably selected from silica rich material with a silica content of at least 50 wt,-%, such as from 50 to 100 wt.-%, preferably from 75 to 100 wt.-%, which are preferably mostly amorphous, with a content of amorphous silica of at least 60 wt.-%, such as from 60 to 100 wt.-%, preferably from 75 to 100 wt.-%, like rice husk ash or glass saw dust.

Before mixing the silica source with the alkaline aluminate source the silica source can be grinded to obtain a dry powder.

Grinding can be conducted with all suitable means for grinding.

The dry powder consisting of a silica source preferably has a particle size d₅₀ of from 10 µm to 1 mm, preferably from 15 µm to 500 µm, more preferably from 20 µm to 100 µm. Further, the dry powder consisting of a silica source preferably has a particle size d₉₀ of from 25 µm to 1.2 mm, preferably from 50 µm to 750 µm, more preferably from 75 µm to 250 µm.

The particle sizes d₅₀ and d₉₀ can be measured by any suitable method such as laser diffraction or Sedigraph.

The alkaline aluminate source usually has a pH of more than 7.0, such as from more than 7.0 to 14.0, preferably from 7.5 to 12.5, more preferably from 8.0 to 11.0.

As alkaline aluminate source any aluminate or aluminate derivative, and mixtures thereof, having a pH of more than 7.0, such as from more than 7.0 to 14.0, preferably from 7.5 to 12.5, more preferably from 8.0 to 11.0, can be selected.

The alkaline aluminate source is preferably a metal aluminate selected from water free metal aluminates of the general formula MₐAl_{b}O_{c}, metal aluminate hydroxides of the general formula MₐAl_{b}(OH)_{c}, and metal aluminate mixed hydroxides of the general formula MₐAl_{b}O_{c}(OH)_{d} and mixtures thereof.

The metal aluminate is preferably selected from alkali metal aluminates, alkaline earth metal aluminates and mixtures thereof.

Examples for alkali metal aluminates are sodium aluminate and potassium aluminate Examples for alkaline earth metal aluminates are calcium aluminates and magnesium aluminates.

The alkaline aluminate source is preferably selected from alkali metal aluminates, especially preferred is sodium aluminate.

The alkaline aluminate source is characterized that in the presence of water the alkaline aluminate source acts as an alkaline base.

In form of an alkaline base the alkaline aluminate source can act as an activator for geopolymerization of the silica monomers and the aluminate monomers present in the mixture to form a geopolymer.

Before mixing the alkaline aluminate source with the silica source the alkaline aluminate source can be grinded to obtain a dry powder.

Grinding can be conducted with all suitable means for grinding.

The dry powder consisting of an alkaline aluminate source preferably has an average particle size d₅₀ of from 10 µm to 1 mm, preferably from 15 µm to 500 µm, more preferably from 20 µm to 100 µm.

Further, the dry powder consisting of an alkaline aluminate source preferably has a particle size d₉₀ of from 25 µm to 1.2 mm, preferably from 50 µm to 750 µm, more preferably from 75 µm to 250 µm.

The particle sizes d₅₀ and d₉₀ can be measured by any suitable method such as laser diffraction or Sedigraph.

The particle sizes d₅₀ and d₉₀ of the alkaline source are usually in the same range as the particle sizes d₅₀ and d₉₀ of the silica source.

The dry powder consisting of a silica source and a dry powder consisting of an alkaline aluminate source can be mixed with any suitable means for mixing dry inorganic powders.

It is preferred that the dry powder binder system has a molar ratio of Si : Al of from 1.0 : 1.0 to 10.0 : 1.0, preferably from 1.5 : 1.0 to 8.0 : 1.0, more preferably from 2.0 : 1.0 to 6.0 : 1.0, still more preferably from 2.5 : 1.0 to 5.0 : 1.0.

The dry powder binder system can comprise further dry powders such as an additional alkaline source, like an alkali oxide, a metal hydroxide or a silicate.

The reason for adding such a further dry powder is to adjust the alkaline content in the dry powder mixture, if needed.

The amount of further dry powders in the dry powder binder system is preferably in the range of from 0 to 20 wt.-%, more preferably from 0 to 15 wt.-%, still more preferably from 0 to 10 wt.-%, based on the total weight of the dry powder binder system.

The dry powder binder system preferably comprises the mixture of the dry powder consisting of a silica source and the dry powder consisting of an alkaline aluminate source in an amount of from 80 to 100 wt.-%, preferably from 85 to 100 wt.-%, still more preferably from 90 to 100 wt.-%, based on the total weight of the dry powder binder system.

It is especially preferred that the dry powder binder system consists of the mixture of the dry powder consisting of a silica source and the dry powder consisting of an alkaline aluminate source.

It is preferred that the dry powder binder system is a predominantly inorganic dry powder binder system more preferably an inorganic dry powder binder system. Preferably, the dry powder binder system is free of organic components.

The dry powder binder system can comprise water of crystallization and/or pore water. These sources of water are not actively added to the dry powder binder system but are either part of the crystalline framework of one or more of the components of the dry powder binder system either by coordinative bonds to ions or by hydrogen bonds to molecules or accumulate in the pores of particles of the components by absorption or adsorption.

It is preferred that the water of crystallization and/or pore water is present in the dry powder binder system in an amount of 0 to 40.0 wt.-%, preferably from 0 to 35.0 wt.-%, more preferably from 0 to 30.0 wt.-%, based on the total weight of the dry powder binder system.

The water of crystallization and/or pore water can be present in any component present in the dry powder binder system.

The present invention requires that no additional water is added to the dry powder binder system.

In an optional second step the dry powder binder system can be mixed with inert particles to obtain a dry powder mixture.

In the case that no inert particles or additives are mixed to the dry powder binder system the optional second step can be omitted and the dry powder binder system can be directly subjected to elevated pressure.

"Inert particles" in the sense of the present invention means that the particles do not participate in geopolymerization after activation in the presence of water.

The inert components are preferably selected from carbon, fibers, powders and inorganic fillers.

The nature of the inert particles depends on the application of the resultant composite material.

In addition to the dry powder binder system and the inert particles additives can be mixed to obtain the dry powder mixture.

The additives are preferably selected from rubber, graphite, metal, such as steel fiber or steel powder, lubricants, such as sulphides, fibers, such as wollastonite or rockwool, abrasives such as barium glass or barium sulphate, fillers, such as vermiculite and others.

The dry powder binder system, the inert particles and optionally the additives can be mixed with any suitable means for mixing dry powders.

It is preferred that the dry powder binder system is present in the dry powder mixture in an amount of from 8 to 99 wt.-%, preferably from 10 to 99 wt.-%, based on the total weight of the dry powder mixture.

It is further preferred that the inert components are present in the dry powder mixture in an amount of from 1 to 92 wt.-%, preferably from 1 to 90 wt.-%, based on the total weight of the dry powder mixture.

The additives can be present in the dry powder mixture in an amount of from 0 to 92 wt.-%, preferably from 0 to 90 wt.-%, based on the total weight of the dry powder mixture.

It is preferred that the dry powder mixture consists of the dry powder binder system, optionally inert particles, and optionally the additives.

The dry powder mixture comprises water of crystallization and/or pore water. These sources of water are not actively added to the dry powder mixture but are either part of the crystalline framework of one or more of the components of the dry powder mixture either by coordinative bonds to ions or by hydrogen bonds to molecules or accumulate in the pores of particles of the components by absorption or adsorption.

It is preferred that the water of crystallization and/or pore water is present in the dry powder mixture in an amount of 0.5 to 40.0 wt.-%, preferably from 1.0 to 35.0 wt.-%, more preferably from 1.5 to 30.0 wt.-%, based on the total weight of the dry powder mixture.

The water of crystallization and/or pore water can be present in any component present in the dry powder mixture.

The present invention requires that no additional water is added to the dry powder mixture.

The dry powder binder system or the dry powder mixture is then subjected to elevated pressure.

The elevated pressure must be as high as to release the water of crystallization and/or pore water from the dry powder mixture or the dry powder binder system.

It is preferred that the elevated pressure is in the range of from 5.0 to 200.0 MPa, preferably from 10.0 to 150.0 MPa, more preferably from 25.0 to 100.0 MPa, most preferably from 40.0 to 80.0 MPa,

Thereby, the temperature is preferably in the range of from 5 to 100 °C, preferably from 7 to 75 °C, more preferably from 15 to 50 °C, most preferably from 20 to 40 °C.

It is especially preferred that the dry powder binder system or the dry powder mixture is subjected to elevated pressure at room temperature, i.e. without controlling the surrounding temperature.

The dry powder binder system or the dry powder mixture is subjected to elevated pressure for a time span of from 1 min to 30 min, preferably from 2 min to 20 min, more preferably from 5 min to 15 min.

Before subjecting the dry powder binder system or the dry powder mixture to elevated pressure the dry powder binder system or the dry powder mixture can be introduced into a mould.

The released water induces geopolymerization of the silica source and the alkaline aluminate source to form a geopolymer. Thereby, as discussed above the alkaline aluminate source acts as alkaline base in the presence of the released water. In form of an alkaline base the alkaline aluminate source acts as an activator for geopolymerization of the silica monomers and the aluminate monomers present in the dry powder mixture to form a geopolymer.

The geopolymer in the composite material is detectable by any suitable means such as XRF, XRD, SEM, Raman spectroscopy or FTIR. These methods are well known in the art.

### Article

In a second aspect the present invention relates to an article comprising the composite material obtainable from the method as described above or below.

It is preferred that the article of the second aspect includes all embodiments and aspects of the method, the dry powder binder system and the dry powder mixture as described above or below.

The article is preferably selected from a component in the construction sector, the automotive sector, aerospace sector or electronics sector.

The components in the construction sector are preferably selected from high-strength and fast-hardening components in building industry such as substitutes for conventional cement products.

The components in the automotive sector are preferably selected from high-strength components such as brake pads or structural automotive parts.

The components in the aerospace sector are preferably selected from high-strength, light weight components in aerospace industry.

The components in the electronics sector are preferably selected from high-strength, electrically insulating components in electronics industry.

### Use

In a third aspect the present invention relates to the use of a dry powder binder system comprising a mixture of a dry powder consisting of a silica source and a dry powder consisting of an alkaline aluminate source for producing a composite material comprising a geopolymer, in which the geopolymerization is induced at elevated pressure without adding additional water.

It is preferred that the use of the third aspect includes all embodiments and aspects of the method, the dry powder binder system and the dry powder mixture as described above or below.

### Benefits of the invention

- Dry activation by pressure and heat enables precise control of the reaction time. By dispensing with liquid components, the handling of the material is simplified, and storage and transport are made easier.
- **Simplified handling:** No need to add liquid, making the production process faster and less error prone.
- **Shelf life:** The dry powder remains stable over long periods of time and does not react with ambient moisture.
- **Controllable activation:** The reaction process is only activated during processing, which ensures reproducible results. The biggest advantage is that the material can be stored as an easy-to-handle dry powder and only activated when required.
- **Broad variety of geopolymers:** By using different components for the silica source and the alkaline aluminate source the molar ratio of Si to Al in the dry powder binder system and consequently the geopolymer can be adapted over a broad range according to the needs for the composite material. In the methods of the prior art such as in EP 3 128 201 A2 or WO 2023/238090 the weight ratio of the SiO₂ to Al₂O₃ is more or less fixed to the weight ratio of the used aluminosilicate source.

### Example

Silicate glass dust (glass grinding dust) / amorphous silica(te) in dry powder form was mixed with sodium aluminate (NaAlO₂) in dry powder form in a planetary ball mill at 300 rpm for 2 min in a molar ratio of Si:Ai=4.

8,66 g of the powder mixture of glass grinding dust/silica(te) and NaAlO₂ was mixed (homogenized) with 1.32 g mostly amorphous carbon (moisture content -15-20 wt.-%) and 0.0132 g ligninsulfonat in a shaker for at least 5 min.

Said mixture was introduced into a tablet press and subjected to a pressure of 25 t (corresponding to 49 MPa) for at least 2 minutes. No further drying steps have been conducted. The resultant composite material has been examined with XRD, FTIR, Raman, AFM, µCT, SEM and Nano-indentation.

## Claims

1. A method for producing a composite material comprising the following steps:
• Mixing a dry powder consisting of a silica source and a dry powder consisting of an alkaline aluminate source to obtain a dry powder binder system;
• Optionally mixing the dry powder binder system with one or more dry powder(s) of inert components to obtain a dry powder mixture,
whereby the dry powder binder system or the dry powder mixture comprises water of crystallization and/or pore water, but no additional water is added to the dry powder binder system and the dry powder mixture;
• Subjecting the dry powder binder system or the dry powder mixture to elevated pressure,
whereby the water of crystallization and/or pore water is released from the dry powder binder system or the dry powder mixture, and the released water induces geopolymerization of the silica source and the alkaline aluminate source to obtain a composite material comprising a geopolymer.

2. The method according to claim 1, wherein the dry powder binder system has a molar ratio of Si : Al of from 1.0 : 1.0 to 10.0 : 1.0, preferably from 1.5 : 1.0 to 8.0 : 1.0, more preferably from 2.0 : 1.0 to 6.0 : 1.0, still more preferably from 2.5 : 1.0 to 5.0 : 1.0.

3. The method according to claims 1 or 2, wherein the silica source is selected from silica, silicate, silicate glass or mixtures thereof, wherein the silica preferably comprises amorphous silica, preferably selected from synthetic amorphous silica, such as silica gel, precipitated silica, pyrogenic silica, fumed silica, electric arc silica and plasma silica, and natural amorphous silica, such as diatomaceous earth, calcined diatomaceous earth and opal, and mixtures thereof.

4. The method according to any one of the preceding claims, wherein the alkaline aluminate source is a metal aluminate selected from water free metal aluminates of the general formula MₐAl_{b}O_{c}, metal aluminate hydroxides of the general formula MₐAl_{b}(OH)_{c}, and metal aluminate mixed hydroxides of the general formula MₐAl_{b}O_{c}(OH)_{d} and mixtures thereof, the metal aluminate preferably is selected from alkali metal aluminates, such as sodium aluminate and potassium aluminate, and alkaline earth metal aluminates, such as calcium aluminates and magnesium aluminates, and mixtures thereof.

5. The method according to any one of the preceding claims, wherein the dry powder binder system comprises, preferably consists of mixture of a dry powder of amorphous silica and a dry powder of sodium aluminate and has a molar ratio of Si : Al of from 1.0 : 1.0 to 10.0 : 1.0, preferably from 1.5 : 1.0 to 8.0 : 1.0, more preferably from 2.0 : 1.0 to 6.0 : 1.0, still more preferably from 2.5 : 1.0 to 5.0 : 1.0.

6. The method according to any one of the preceding claims, wherein the inert components are selected from carbon, powders, fibers, powders and inorganic fillers.

7. The method according to any one of the preceding claims, wherein in the dry powder mixture additionally additives are mixed, wherein the additives are preferably selected from rubber, graphite, metal, such as steel fiber or steel powder, lubricants, such as sulphides, fibers, such as wollastonite or rockwool, abrasives such as barium glass or barium sulphate, fillers, such as vermiculite.

8. The method according to any one of the preceding claims, wherein the water of crystallization and/or pore water is present in the dry powder binder system in an amount of 0 to 40.0 wt.-%, preferably from 0 to 35.0 wt.-%, more preferably from 0 to 30.0 wt.-%, based on the total weight of the dry powder binder system, or in the dry powder mixture in an amount of 0.5 to 40.0 wt.-%, preferably from 1.0 to 35.0 wt.-%, more preferably from 1.5 to 30.0 wt.-%, based on the total weight of the dry powder mixture.

9. The method according to any one of the preceding claims, wherein the dry powder binder system is present in the dry powder mixture in an amount of from of 8 to 99 wt.-%, preferably from 10 to 99 wt.-%, based on the total weight of the dry powder mixture.

10. The method according to any one of the preceding claims, wherein the inert components are present in the dry powder mixture in an amount of from 1 to 92 wt.-%, preferably from 1 to 90 wt.-%, based on the total weight of the dry powder mixture.

11. The method according to any one of the preceding claims, wherein the elevated pressure is in the range of from 5.0 to 200.0 MPa, preferably from 10.0 to 150.0 MPa, more preferably from 25.0 to 100.0 MPa, most preferably from 40.0 to 80.0 MPa.

12. The method according to any one of the preceding claims, wherein the dry powder binder system or the dry powder mixture is subjected to elevated pressure at a temperature in the range of from 5 to 100 °C, preferably from 7 to 75 °C, more preferably from 15 to 50 °C, most preferably from 20 to 40 °C.

13. An article comprising the composite material obtainable from the method according to any one of the preceding claims.

14. The article according to claim 13 being a component in the construction sector, the automotive sector, aerospace sector or electronics sector.

15. Use of a dry powder binder system comprising a mixture of a dry powder consisting of a silica source and a dry powder consisting of an alkaline aluminate source for producing a composite material comprising a geopolymer, in which the geopolymerization is induced at elevated pressure without adding additional water.
